Europäisches Patentamt

European Patent Office

Office européen des brevets

(19)

(11)  **EP 0 721 794 B1**

(12)  **EUROPÄISCHE PATENTSCHRIFT**

(45) Veröffentlichungstag und Bekanntmachung des Hinweises auf die Patenterteilung:
**31.05.2000  Patentblatt 2000/22**

(51) Int Cl.$^7$: **B01D 53/94**

(21) Anmeldenummer: **96100257.3**

(22) Anmeldetag: **10.01.1996**

(54) **Verfahren und Vorrichtung zur katalytischen NO-Reduzierung von Kfz-Abgasen**

Process and device for catalytic reduction of nitroxyde in exhaust gases of vehicles

Procédé et installation pour la réduction catalytique de l'oxyde d'azote des gazs d'échappement des véhicules

(84) Benannte Vertragsstaaten:
**FR GB**

(30) Priorität: **13.01.1995  DE 19500788**

(43) Veröffentlichungstag der Anmeldung:
**17.07.1996  Patentblatt 1996/29**

(73) Patentinhaber: **DORNIER GmbH**
**88039 Friedrichshafen (DE)**

(72) Erfinder:
• **Benz, Uwe, Dipl.-Ing.**
  **D-88690 Uhldingen (DE)**
• **Schmid, Ottmar, Dipl.-Ing.**
  **D-88677 Markdorf (DE)**

(56) Entgegenhaltungen:
**DE-A- 4 237 184**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zur katalytischen Reduktion von Stickoxiden für mobile Anwendungen nach dem Oberbegriff des Anspruch 1.

Für die Nutzung von Kraftfahrzeugen mit Otto- und insbesondere Dieselmotoren ist die Einhaltung entsprechender gesetzlicher Emissionsvorschriften unabdingbar. In diesem Zusammenhang wird die katalytische $NO_x$-Reduktion mit Wasserstoff vorteilhaft angewendet.

Diese katalytische Entfernung von Stickoxiden aus den Verbrennungsabgasen von Kraftfahrzeugen wird unter Einsatz von Wasserstoff an geeigneten Katalysatoren nach der Reaktion

$$2\,NO + 2\,H_2 \rightarrow N_2 + 2\,H_2O$$

durchgeführt.

Bei den bekannten Verfahren zur Entfernung von Stickoxiden nach der $NO_x$-Reduktion wird der für die Reaktion benötigte Wasserstoff im Fahrzeug mitgeführt, z.B. über Druckgastanks, Flüssig-Wasserstofftanks oder Metallhydridspeicher. An diesen Verfahren ist nachteilig, daß für die Wasserstoffmitführung große, schwere Behälter benötigt werden, die darüberhinaus eine eng limitierte Kapazität aufweisen, so daß kurze Nachfüllintervalle notwendig sind. Außerdem stellt die Befüllung oder Auswechslung der $H_2$-Speicher sowie die Anwesenheit solcher $H_2$-Speicher selbst ein sicherheitstechnisches Problem dar.

Aus der **EP 0 566 071 A1** ist ein Verfahren zur NO-Reduzierung von Abgasen in einem Kraftfahrzeug bekannt, bei der der benötigte Wasserstoff an Bord des Kraftfahrzeugs durch Elektrolyse erzeugt wird. Die Elektrolyse erfolgt an einer Elektrodenanordnung, zwischen denen ein protonenleitender Festelektrolyt vorhanden ist. Dabei besteht die Anode aus einem Oxidationskatalysator und die Kathode aus einem Reduktionskatalysator. Die NO-Reduktion erfolgt unmittelbar an der Kathode unter Beteiligung des durch den Festelektrolyt hindurchtretenden Wasserstoff.

Dieses Verfahren weist insbesondere die folgenden Nachteile auf:

- Der Katalysator muß auf eine Reaktionstemperatur von mindestens 300 °C aufgeheizt werden und ist deshalb für Otto- und Dieselmotoren nicht praktikabel, insbesondere bei Startvorgängen und im Teillastbereich. Die Abgastemperaturen im Teillastbereich sinken an der Stelle, an der das Abgasnachbehandlungssystem innerhalb des Fahrzeugs angeordnet ist, bis ca. 100°C. Dadurch benötigen Systeme, die oberhalb von a. 100°C arbeiten, eine zusätzliche Heizung.

- Das Verfahren weist einen geringen Wirkungsgrad auf: Der erzeugte $H_2$-Gasstrom ist kleiner als 1 ml/min. Im Kraftfahrzeug wird aber ein $H_2$-Gasstrom von mindestens 0,2-0,7 l/min benötigt. Wollte man dieses Verfahren bei einem handelsüblichen Dieselfahrzeug anwenden, würde eine Elektrode mit einem Durchmesser von über einem Meter (ca. 3 $m^2$ Elektrodenfläche) benötigt.

Aus der **DE 42 30 408 A1** ist ein Verfahren zur NO-Reduzierung von Abgasen in einer Brennkraftmaschine bekannt, bei der der benötigte Wasserstoff durch Elektrolyse von Wasser unter Verwendung einer protonen-leitenden Membran erzeugt wird.

Dieses Verfahren weist insbesondere folgende Nachteile auf:

- Unter Frostbedingungen ist eine zusätzliche Heizung des Elektrolyseurs notwendig, um eine Zerstörung der Membran zu verhindern.

- Es werden hohe Anforderungen an die Wasserqualität gestellt (entionisiertes Wasser notwendig).

- Die Verfahrenstechnik ist sehr aufwendig, da die Zufuhr des Wassers nur über einen wasserdampfbeladenen Kreislauf möglich ist.

Aufgabe der Erfindung ist es, ein Verfahren zur $NO_x$-Reduzierung unter Verwendung von Wasserstoff in einem Kraftfahrzeug zu schaffen, bei dem eine kompakte, energieeffiziente, mechanisch belastbare und kostengünstige Wasserstofferzeugung direkt an Bord des Kraftfahrzeugs erzielt werden kann.

Diese Aufgabe wird mit einem Verfahren nach Anspruch 1 sowie eine Vorrichtung nach Anspruch 12 gelöst. Vorteilhafte Ausbildungen sind Gegenstände von Unteransprüchen.

Erfindungsgemäß wird der für die NO-Reduzierung benötigte Wasserstoff an Bord des Kraftfahrzeugs durch eine Elektrolyse unter Verwendung eines flüssigen fixierten Elektrolyten erzeugt. Bevorzugt wird dabei ein alkalischer Elektrolyt verwendet. Diese Art der Elektrolyse wird im folgenden auch als FAE-Elektrolyse bezeichnet (F= flüssiger, A=alkalischer E=Elektrolyt).

Die Erzeugung des Wasserstoffs an Bord des Kraftfahrzeugs mit fixiertem, insbesondere alkalischem Elektrolyten besitzt folgende Vorteile:

- gute Eignung für den zyklischen Betrieb
- Es bestehen nur geringe Anforderungen an die Wasserqualität.
- der $H_2$-Generator ist geeignet für den Betrieb in bewegten Systemen ohne Zusatzeinrichtungen wie z. B. Separatoren.
- niedriger elektrischer Leistungsbedarf aufgrund des hohen Wirkungsgrads.
- Die Herstellung des $H_2$-Generators in der Massenproduktion ist sowohl durch die einfachen Fertigungsschritte als auch durch die kommerziell verfügbaren Werkstoffe kostengünstig.

- einfache Verfahrenstechnik
- Anpassung an die geforderte Geometrie ist leicht möglich.

Die Wasserelektrolyse wird nach der Beziehung

$$H_2O + \text{elektrische Energie} \rightarrow H_2 + 1/2\ O_2 + \text{Wärme}$$

an mehreren aneinandergeschalteten Elektrolysezellen durchgeführt. Der Betrieb des Elektrolyseurs erfolgt über der thermoneutralen Spannung , so daß zusätzlich Wärme entsteht. Der elektrische Leistungsbedarf für die Erzeugung von Wasserstoff kann von der im Kraftfahrzeug vorhanden Lichtmaschine aufgebracht werden. Insgesamt wird für die vollständige Reduktion der Stickoxide der heutigen PKW-Dieselmotorabgasen ein maximaler elektrischer Leistungsbedarf von 190 W benötigt. Dieser Spitzenleistungsbedarf wird jedoch durch eine Elektrolyseur-Gasdruckabsenkung stark verringert. Der mittlere elektrische Leistungsbedarf kann aufgrund der kurzen Ansprechzeiten der Elektrolyse durch eine bedarfsorientierte $H_2$-Erzeugung über schon vorhandene Gaspedal-Potentiometer beträchtlich gesenkt werden.

Der relativ geringe Wasserbedarf wird über einen separaten Wasserbehälter gedeckt. Vorteilhaft kann die Wasserversorgung auch über die wasserdampfbeladenen Motorenabgase des Kraftfahrzeugs erreicht werden.

Eine separate Temperierung für den Elektrolyseur wird nicht benötigt. Der Wärmeaustausch mit der Umgebung ist aufgrund der einfachen und flexiblen Betriebsweise des Elektrolyseurs ausreichend. Der Betriebstemperaturbereich des Elektrolyseurs liegt zwischen -25 °C und +95°C.

Der Elektrolyseur kann bei variablem Druck betrieben werden, wodurch sehr schnelle Lastwechsel durchführbar sind.

In einer besonders vorteilhaften Ausbildung wird Wasserstoff neben der Elektrolyse mit fixiertem flüssigen Festelektrolyt auch durch Wasserdampfreformierung und/oder durch Partielle Oxidation von Kohlenwasserstoffen, z.B. Methanol, Diesel- oder Ottokraftstoff erzeugt. Die Wasserstofferzeugung durch Partielle Oxidation oder Reformierung von Kohlenwasserstoffen an Bord eines Kraftfahrzeugs ist an sich sind aus der **EP 0 537 968 A1** bekannt.

In diesem Fall umfaßt die Vorrichtung zur Erzeugung von Wasserstoff neben einen Elektrolyseur mit flüssigem fixierten Festelektrolyten zusätzlich einen Reaktor zur Wasserdampfreformierung und/oder einen Reaktor zur Partiellen Oxidation von Kohlenwasserstoffen. Derartige Hybridsysteme sind besonders vorteilhaft für Anwendungen, die einen hohen Wasserstoffbedarf haben und kurze Ansprechzeiten bei Kaltstart und Lastwechseln erfordern.

Die Erfindung wird anhand von Fig. näher erläutert. Es zeigen:

| | |
|---|---|
| Fig. 1 | eine schematische Darstellung zur katalytischen $NO_x$-Reduktion |
| Fig. 2 | eine Tabelle zum elektrischen Leistungsbedarf sowie Wasserverbrauch und Baugröße des Elektrolyseurs |
| Fig. 3 bis 5 | drei verschiedene Ausführungsformen zur erfindungsgemäßen $H_2$-Erzeugung mittels FAE-Elektrolyse |
| Fig. 6 | der prinzipielle Aufbau eines Elektrolyseurs mit flüssigem fixiertem Elektrolyten |
| Fig. 7 | eine schematische Darstellung zur $H_2$-Erzeugung durch Wasserdampfreformierung von Methanol |
| Fig. 8 | einen Reaktor zur Durchführung der Wasserdampfreformierung von Methanol |
| Fig. 9 | eine schematische Darstellung zur $H_2$-Erzeugung durch partielle Oxidation von Methanol |
| Fig. 10 | einen Reaktor zur Durchführung der partiellen Oxidation von Methanol. |

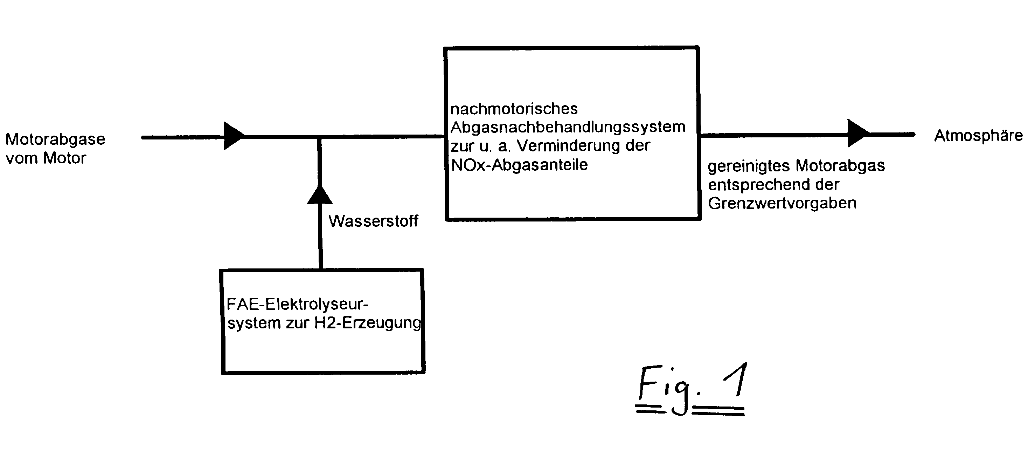

Fig. 1 zeigt das allgemeine Verfahrensschema zur katalytischen Reduktion von Stickoxiden in Motorabgasen, wie es bereits in der Beschreibungseinleitung dargelegt wurde. Die vorliegende Erfindung betrifft dabei die Erzeugung des Wasserstoffs, der für die $NO_x$-Reduktion benötigt wird. Erfindungsgemäß wird der Wasserstoff durch Elektrolyse mittels fixiertem, bevorzugt alkalischem Elektrolyten erzeugt.

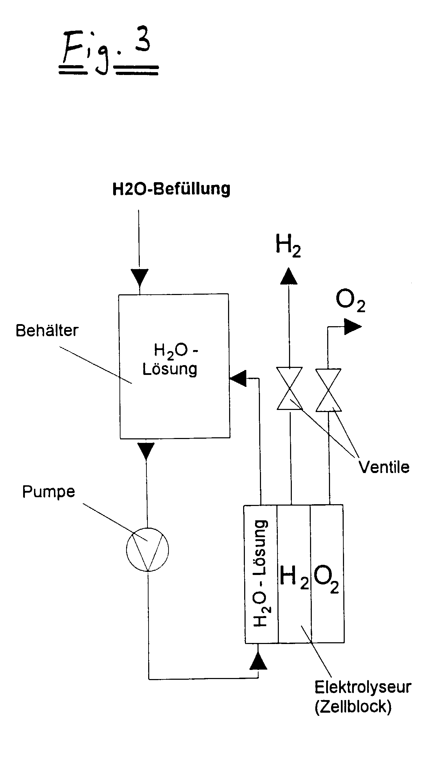

In den Fig. 3 bis 5 werden unterschiedliche erfindungsgemäße Ausführungsformen zur On-Board-$H_2$-Erzeugung mittels FAE-Elektrolyse dargestellt. Diese Ausführungsformen erfüllen die Anforderungen, die an die $H_2$-Versorgung innerhalb des in Fig. 1 dargestellten Verfahrens zur Erreichung der gesetzlich vorgeschriebenen $NO_x$-Grenzwerte gestellt werden.

Die in Fig. 3 bis 5 gezeigten Ausführungsformen unterliegen neben der Anforderung hinsichtlich ihrer Kfz-Tauglichkeit folgenden Randbedingungen:

- Verminderung der $NO_x$-Anteile in Diesemmotorabgasen auf 0,7g/Meile bis 0,2 g/Meile
- Maßgebend ist der USA-Testzyklus FTP75 mit einer mittleren Geschwindigkeit von 34,1 km/h sowie einer maximalen Geschwindigkeit von 92,2 km/h.
- Überschußanteil von $H_2$ (Stöchiometrie) gegenüber NO von 2,0

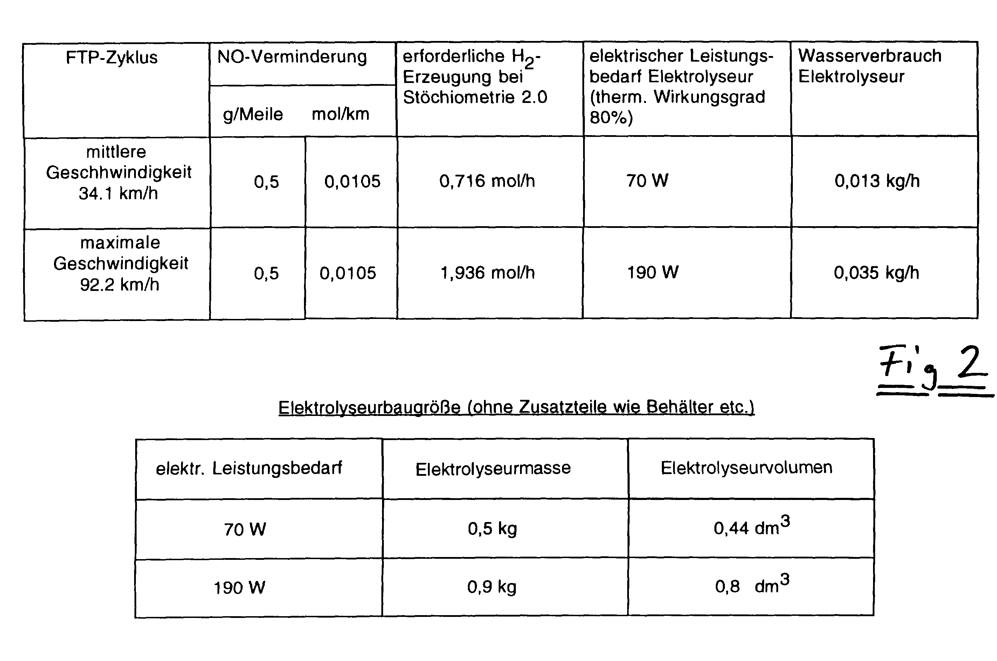

Auf der Basis dieser Randbedingungen ergeben sich die in Fig. 2 angegebenen Werte für den elektrischen Leistungsbedarf des Elektrolyseurs sowie den Wasserverbrauch. Ebenfalls angegeben sind die Werte für die sich daraus ergebende Baugröße des Elektrolyseurs. Bei den Werten der Tabelle ist anzumerken, daß diese unter der Annahme von 100% NO im Summenwert von $NO_x$ berechnet worden sind. Da NO der dominierende Anteil im Summenwert des $NO_x$ darstellt, ist diese Vereinfachung gerechtfertigt.

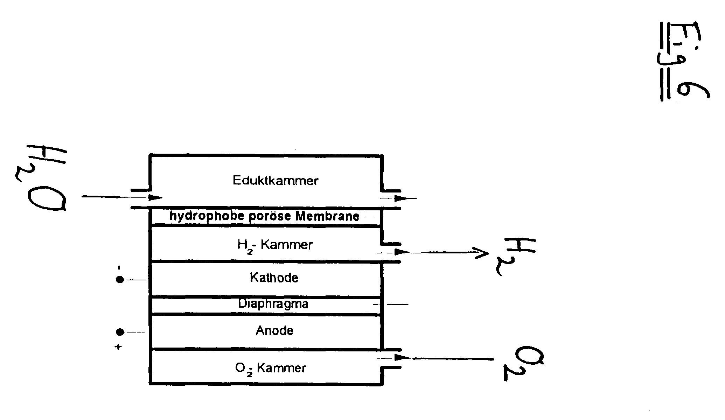

Die in Fig. 3 dargestellt erste Ausführungsform umfaßt einen Behälter zur Speicherung der wäßrigen Lösung. Die wäßrige Lösung stellt das Edukt für die Elektrolyse dar. Als wäßrige Lösung kann z.B. eine wäßrige Lösung von Salzen anorganischer und organischer Säuren (Acetate, Phosphate etc) oder Mischungen von Wasser mit organischen Additiven (z.B. Glykole, Harnstoff, Glycerin) verwendet werden. Daneben kann aber auch anstatt einer wäßrigen Lösung $H_2O$ verwendet werden. Die wäßrige Lösung in dem Behälter wird über eine Pumpe zu dem FAE-Elektrolyseur gefördert. Dieser ist hier nur schematisch dargestellt. Er besteht vorteilhaft aus mehreren hintereinandergeschalteten Einzelzellen, die zu einem Zellblock (stack) zusammengefaßt sind. Eine FAE-Elektrolyseur- Zelle sowie deren Arbeitsweise ist an sich bekannt. Sie ist z.B. in der DE 195 35 212.2 sowie der DE 195 44 585.6 der Anmelderin beschrieben. (Eine beispielhaft Ausbildung einer FAE-Elektrolysezelle ist in der Fig.6 dargestellt.) An dem $O_2$- und dem $H_2$-Ausfluß des Elektrolyseurs ist jeweils ein Ventil angebracht. Die wäßrige Lösung wird in einem Kreislauf geführt, und zwar vom Behälter über den Elektrolyseurstack zurück zum Behälter. Dadurch kann eine Homogenisierung der Temperatur sowie der Konzentration der wäßrigen Lösung erreicht werden. Um die bei der Elektrolyse entstehenden Wasserverluste auszugleichen, kann dem Behälter Wasser drucklos zugeführt werden. Hierzu kann Wasser mit Leitungswasserqualität verwendet werden. Eine Nachfüllung des Behälters muß jedoch erst erfolgen, nachdem durch die Wasserverluste eine Aufkonzentrierung der wäßrigen Lösung auf den maximal zulässigen Grenzwert erfolgt ist. Die durch den Elektrolyseur erzeugten Produktgase Sauerstoff und Wasserstoff werden über die Ventile mit entsprechendem Druck weitergeleitet. Diese Ventile verhindern außerdem ein Rückströmen von Gasen und Flüssigkeiten. Der elektrische Leistungsbedarf kann über die im Fahrzeug vorhandene Lichtmaschine gedeckt werden. Der mittlere Leistungsbedarf kann durch eine bedarfsoptimierte Steuerung der $H_2$-Erzeugung deutlich abgesenkt werden, z.B. über eine parallele Abgreifung eines schon vorhandenen Signals am Potentiometers für die Gaspedalsteuerung des Kraftfahrzeugs. Auf die Förderpumpe kann insbesondere bei geringerem $H_2$-Bedarf (zum Beispiel bei der Version mit 70 W elektrischem Leistungsbedarf des Elektrolyseurs) verzichtet werden. Eine Homogenisierung der Temperatur und Konzentration der wäßrigen Lösung findet durch die prozeßbedingten zellinterne Aufheizung des Elektrolyseurs statt. Diese Aufheizung verursacht eine Dichteänderung der wäßrigen Lösung, die eine Vermischung zur Folge hat.

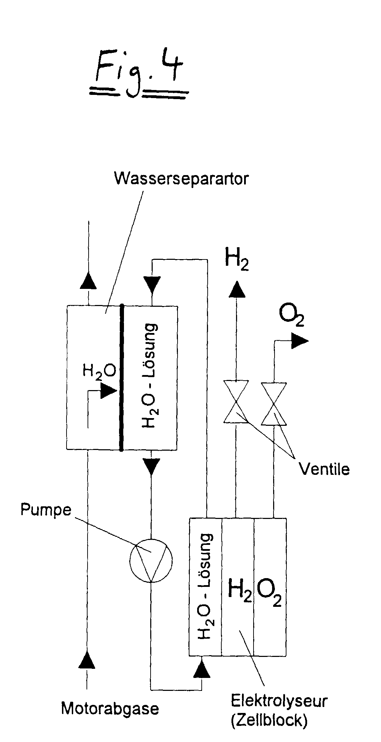

In der in der Fig. 4 dargestellten Ausführungsform wird das Wasser für die Elektrolyse aus den wasserdampfbeladenen Motorabgasen entnommen. Dadurch ist keine Nachfüllung von Wasser wie in der Ausführungsform nach Fig. 3 notwendig. Zur Separation des Wassers aus den Motorabgasen ist ein Separator vorhanden. Das im Separator gewonnene Wasser wird unmittelbar in den Kreislauf der wäßrigen Lösung eingespeist, welche das Edukt für die Elektrolyse darstellt. Ansonsten entspricht die gezeigte Ausführung der in der Fig. 3 dargestellten.

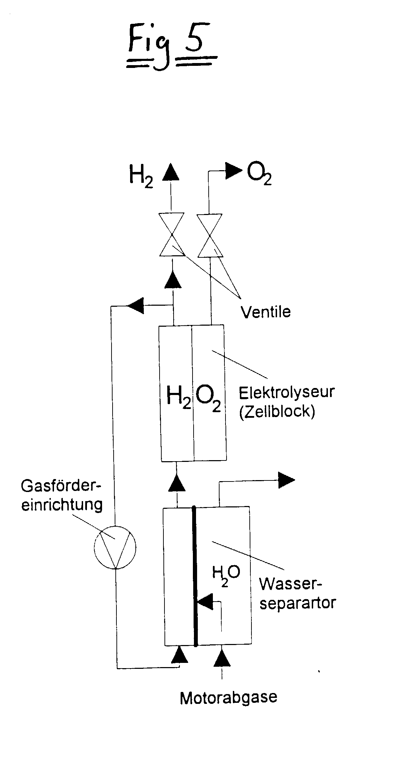

Fig. 5 zeigt eine weitere erfindungsgemäße Ausführungsform zur On-Board-Erzeugung des Wasserstoffs. Im Gegensatz zu den beiden Ausführungen nach Fig. 3 und Fig. 4 wird hier nicht eine wäßrige Lösung, sondern Wasser in Form von Wasserdampf als Edukt für die Elektrolyse verwendet. Die Zuführung des Edukts erfolgt über einen $H_2$-Kreislauf, der gleichzeitig zur Temperierung der Elektrolysezellen im Elektrolyseur dient. Hierzu wird anstatt einer Flüssigkeitspumpe eine Gasfördereinrichtung notwendig. Der Elektrolyseur vereinfacht sich, da die bisher benötigten Kammern für die wäßrige Lösung wegfallen. Mit dem Separator wird Wasser aus den wasserdampfbeladenen Motorabgasen auf den $H_2$-Kreislauf übertragen. Die Motorabgase dienen bei einem Kaltstart auch zur Aufwärmung der einzelnen Bauteile. Dabei wird das $H_2$-Gas über den Separator erwärmt. Die Überschußwärme wird durch freie Konvektion und entsprechende Ausbildung der Bauteile an die Umgebung abgegeben.

Fig. 6 zeigt den prinzipiellen Aufbau einer an sich bekannten einzelnen FAE-Elektrolyszelle, wie sie auch in dem vorliegenden erfindungsgemäßen Verfahren vorteilhaft eingesetzt werden kann. Sie umfaßt folgende Komponenten:

- Elektroden, zwischen denen ein poröses Diaphragma angeordnet ist, wobei in den Poren von Elektroden und Diaphragma eine Elektrolytlösung durch Kapillarkräfte fixiert ist.
- eine an die Kathode angrenzende Wasserstoff-Produktgaskammer ($H_2$)
- eine an die Anode angrenzende Sauerstoff-Produktgaskammer ($O_2$)
- eine von der $H_2$-Produktgaskammer durch eine Membran getrennte Kammer für das Edukt, nämlich Wasser oder eine wäßrige Lösung .

Der Elektrolyse-Prozeß wird durch Aufprägung einer Gleichspannung an die Elektroden oberhalb der Zersetzungsspannung von ca. 1,23 V eingeleitet (Faradaysche Elektrodenreaktion). Die Elektrolysegase entstehen hierbei innerhalb der mit dem Elektrolyt gefüllten Poren der Elektroden und werden in die anliegenden Gaskammern der Elektrolysezelle bewegt. Eine entsprechende Porenverteilung der Elektroden verhindert ein Herausschieben von Elektrolyt mit den entweichenden Elektrolysegasen. Dabei wird eine Phasenseparation zwischen Elektrolysegasen und Elektrolyt innerhalb der Elektroden erzielt, zusätzliche Gas-Separatoren werden eingespart, die Elektrolysegase können direkt weiterverwendet werden.

Die Elektrolysewasserzuführung zu den Elektroden erfolgt durch Gasdiffusion von der Eduktkammer über die Membran und Wasserstoff-Kammer zum Elektrolyten in den Elektroden. Triebkraft der Wasserdampfdiffusion ist die Differenz der Wasserdampf-Partialdrücke in Wasserreservoir und in den Elektroden.

Die Membran zwischen Wasserkammer und Gaskammer der Kathode verhindert eine beträchtliche Kontamination der Elektroden mit Verunreinigungen im Wasserreservoir und bewirkt eine hohe Lebensdauer der Elektroden. Es können sowohl hydrophobe als auch hydrophile Membranen verwendet werden (z.B. PTFE, PEEK, Silikon, Polypropylen). Vorteilhaft wird ein Membransystem aus zwei Membranschichten verwendet, wobei die eine Schicht, die dem Wasser zugewandt ist, hydrophil ist, und die andere Schicht, die dem Gas zugewandt ist, hydrophob oder dicht ist.

Als Elektrolyt können zum Beispiel eingesetzt werden: Säuren, Basen und Metallsalzlösungen mit hoher elektrischer Leitfähigkeit wie zum Beispiel: Kaliumhydroxid oder andere Alkali- und Erdalkalihydroxide in Konzentrationen von etwa 5 bis 12 mol/Liter; Schwefelsäure von etwa 2 bis 5 mol/Liter; Phosphorsäure etc.

Vorteilhaft wird der benötigte Wasserstoff für die katalytische $NO_x$-Reduktion nicht allein durch die beschriebene FAE-Elektrolyse erzeugt, sondern zusätzlich durch Wasserdampfreformierung und/oder durch Partielle Oxidation von Kohlenwasserstoffen, z.B. Methanol, Diesel- oder Ottokraftstoff. Die zusätzlichen Komponenten werden im folgenden anhand von Beispielen näher beschrieben:

**Erzeugung von Wasserstoff durch Reformierung von Kohlenwasserstoffen**

Besonders geeignet für die Reformierung von Kohlenwasserstoffen ist Methanol. Auch die Verwendung von Diesel- oder Ottokraftstoff zur Reformierung ist möglich.

Eine vorteilhafte Reaktion hierzu ist die Wasserdampfreformierung von Methanol nach der Gleichung

$$CH_3OH + H_2O \rightarrow 3\,H_2 + CO_2$$

und die partielle Oxidation von Methanol nach der Gleichung

$$CH_3OH + 1/2\,O_2 \rightarrow 2\,H_2 + CO_2.$$

Die erste Reaktion ist endotherm und mit Hilfe an sich bekannter Katalysatoren, z.B. Katalysatoren mit den aktiven Komponenten Kupfer und Zink bereits bei 200 bis 400°C durchführbar.

Die zweite Reaktion ist exotherm und wird ebenfalls mit Unterstützung an sich bekannter Katalysatoren z.B. Pt, Pd, Ru oder CuZnO durchgeführt.

Bei beiden Reaktionen entsteht je nach Betriebsweise der Reaktoren CO im Bereich von einigen hundert ppm bis zu einigen Prozenten.

Die Prozesse der Wasserdampfreformierung und der Partiellen Oxidation anderer Kohlenwasserstoffe sind an sich bekannt und laufen nach vergleichbaren Gleichungen, jedoch unter anderen Reaktionsbedingungen (im wesentlichen höhere Temperaturen) und ggf. an anderen Katalysatoren ab. Für die Prozeßführungen und Reaktorvarianten gelten jedoch prinzipiell die gleichen Aussagen wie nachfolgend für den Spezialfall des Methanols beschrieben.

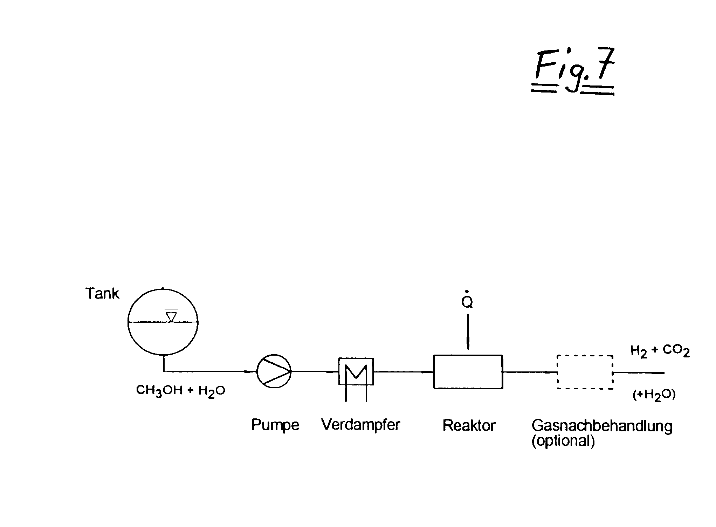

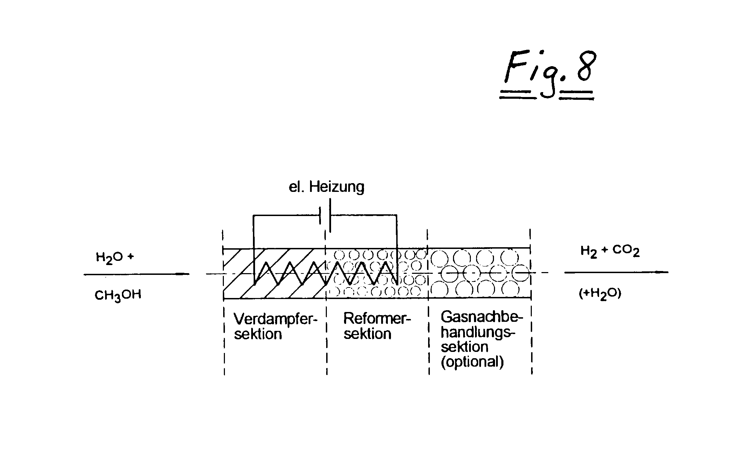

Wasserdampf-Reformierung von Methanol (Fig. 7,8)

Fig. 7 zeigt den Verfahrensablauf für die Wasserdampfreformierung von Methanol. Zunächst wird aus einem Tank ein Wasser-Methanol-Gemisch, vorzugsweise im Molverhältnis Methanol:Wasser = 1:1 bis 1:2 gefördert. Der Tank kann hierbei unter Umgebungsdruck stehen. Die Förderung erfolgt über eine Pumpe, die über eine geeignete Ansteuerung (z.B. Drehzahlregelung) lastabhängig direkt die Dosierfunktion übernimmt. Alternativ kann die Förderung der Flüssigkeiten über eine konstant laufende Pumpe erfolgen, wobei die anschließende Dosierung z.B. über Elektromagnetventile, vergleichbar den Einspritzventilen in einem Kfz vorgenommen wird. Anschließend wird das Wasser-Methanol-Gemisch in einem Verdampfer verdampft und in den Reaktor geleitet. Im Reaktor findet dann unter Zuführung von Wärme am Katalysator die Umsetzung zu Wasserstoff und $CO_2$ und $H_2$ statt. Als Wärmequelle kann hier vorzugsweise eine elektrische Heizung verwendet werden. Die Wärmezufuhr im Reaktor kann z. B. durch eine Temperaturregelung im Katalysator angepaßt werden. Gegebenenfalls kann anschließend der CO-Anteil des Produktgases in einer weiteren Reaktorstufe gesenkt werden und/oder die Wasserstoffausbeute erhöht werden, z.B. über die an sich bekannte Shift-Reaktion

$$CO + H_2O \rightarrow H_2 + CO_2.$$

Anstatt Wasser und Methanol als Gemisch in demselben Tank zu speichern, können Wasser und Methanol auch getrennt voneinander in verschiedenen Tanks gespeichert und daraus gefördert werden.

Fig. 8 zeigt eine vorteilhafte Ausführung eines Reaktors zur Durchführung der Wasserdampfreformierung von Kohlenwasserstoffen. Er ist in der Form eines Rohres ausgebildet, vorzugsweise mit einem Innendurchmesser von 5 bis 50 mm. Der Reaktor ist in drei Stufen unterteilt. Im Zentrum befindet sich die Hauptreaktionsstufe, in welchem ein Katalysator eingebracht ist. Hier findet die Wasserdampfreformierung statt. Der Katalysator liegt in Form von Schüttgut vor, allerdings können auch Monolithe verwendet werden. Vor der Hauptreaktionsstufe ist eine Verdampfersektion angeordnet, in der das eintretende Wasser-Methanol-Gemisch verdampft wird. Im Anschluß an die Hauptreaktionsstufe ist eine Nachbehandlungsstufe angeordnet. Darin wird das entstehende CO über eine Shiftreaktion vermindert.

Abgebildet ist auch ein elektrische Heizung, mit der die Hauptreaktionszone beheizt wird. Sie ist hier im Reaktionsraum selbst angeordnet, sie kann aber auch im Rohraußenbereich angeordnet werden. Alternativ kann die Beheizung des Reaktors auch über die heißen Abgase des Verbrennungsmotors des Kraftfahrzeugs erfolgen. Dabei wird der heiße Abgasstrom über eine Berippung geführt, die an der Reaktoraußenwand angebracht ist.

In der Abbildung ist zu erkennen, daß mit der bereits erwähnten Heizung auch die Verdampferstufe beheizt wird. Es sind aber auch Ausführungen möglich, mit dem die einzelnen Stufen einschließlich der Nachbehandlungsstufe unabhängig voneinander beheizbar sind. So kann insbesondere die Verdampferstufe stärker beheizt werden als die Reformerstufe (Hauptreaktionsstufe). Die Nachbehandlungsstufe wird nicht oder nur schwach beheizt, wobei die entsprechende Heizung hier nicht eingezeichnet ist.

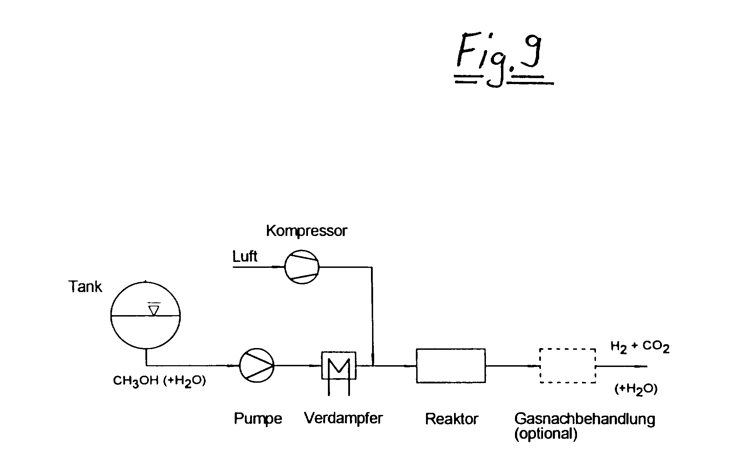

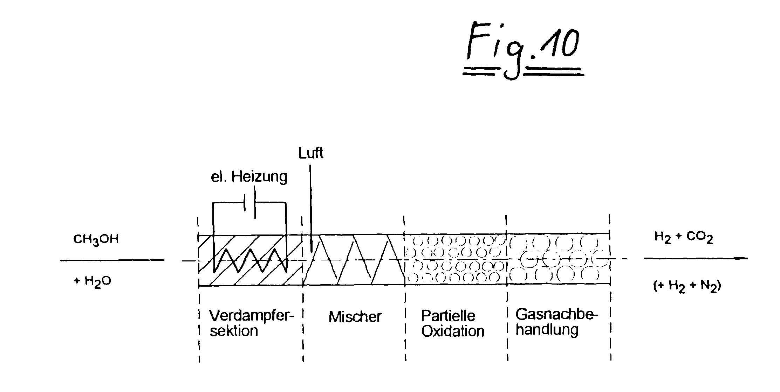

Partielle Oxidation von Methanol (Fig. 9,10)

Fig. 9 zeigt den Verfahrensablauf bei der Partiellen Oxidation von Methanol. Zunächst wird aus einem Tank ein Wasser-Methanol-Gemisch, vorzugsweise im Molverhältnis Methanol : Wasser = 1:0 bis 1:2 gefördert. Der Tank kann hierbei unter Umgebungsdruck stehen. Die Förderung erfolgt über eine Pumpe, die ggf. über eine geeignete Ansteuerung, z.B. Drehzahlregelung lastabhängig direkt die Dosierfunktion übernimmt. Alternativ kann die Förderung der Flüssigkeiten über eine konstant laufende Pumpe erfolgen, wobei die anschließende Dosierung z.B. über Elektromagnetventile, vergleichbar den Einspritzventilen in einem Kfz vorgenommen wird. Anschließend wird das Wasser-Methanol-Gemisch verdampft. Danach wird dem Dampfgemisch über einen Kompressor z.B. eine Membranpumpe Luft zugeführt und die Mischung in den Reaktor geleitet. Im Reaktor findet an einem Katalysator die exotherme Umsetzung zu Wasserstoff und $CO_2$ und $H_2$ statt. Vorteilhaft kann anschließend der CO-Anteil des Produktgases in einer weiteren Reaktorstufe gesenkt werden und/oder die Wasserstoffausbeute erhöht werden, z.B. über die an sich bekannte Shift-Reaktion

$$CO + H_2O \rightarrow H_2 + CO_2.$$

Wie beim oben beschriebenen Prozeß der Wasserdampfreformierung können auch hier Wasser und Methanol anstatt als Gemisch in demselben Tank gespeichert zu werden, auch getrennt voneinander in verschiedenen Tanks gelagert und daraus gefördert werden. Dabei kann vorteilhaft das Wasser auch erst nach der Partiellen Oxidation zugeführt werden. Dies hat den Vorteil, das der CO-Gehalt zusätzlich vermindert wird.

In Fig. 10 ist eine konkrete Ausführung eines Reaktors zur Durchführung der Partiellen Oxidation von Methanol dargestellt. Er ist als Rohr ausgebildet, dessen Innendurchmesser bevorzugt 5 bis 50 mm beträgt. Im Zentrum befindet sich wieder die Hauptreaktionsstufe mit dem Katalysator, an dem die Partielle Oxidation geschieht. Im rohrförmigen Reaktor - der Hauptreaktionsstufe vorgeschaltet - ist eine Verdampferstufe angeordnet, die durch eine elektrische Heizung beheizt wird. Anstatt oder zusätzlich zu der Heizung kann eine Zufuhreinrichtung vorhanden sein, mit der die bei der Partiellen Oxidation an dem Katalysator entstehenden heißen Produktgase z.B. im Gegenstrom an die Außenwand des Reaktors geführt werden können. Zwischen Verdampferstufe und Hauptreaktionsstufe befindet sich eine Mischerstufe, in dem das dampfförmige Methanol-Wasser-Gemisch mit von außen zugeführter Luft vermischt und in die Reformerstufe geleitet wird. Der Reformerstufe nachgeschaltet ist eine Gasnachbehandlungsstufe, in welcher ein weiterer Umsatz von Restmethanol mit Wasserdampf erfolgt und/oder das entstehende CO mit Wasserdampf über eine Shift-Reaktion vermindert wird. Diese Stufe wird nicht oder nur schwach beheizt, wobei die entsprechende Heizung hier nicht eingezeichnet ist.

**Patentansprüche**

1. Verfahren zur Reduzierung von Stickoxiden in Abgasen von Kraftfahrzeugen durch Reduktion an einem Katalysator, wobei der für die Stickoxid-Reduktion benötigte Wasserstoff an Bord des Kraftfahrzeugs durch Elektrolyse erzeugt wird, **dadurch gekennzeichnet**, daß die Elektrolyse mittels eines Elektrolyseurs durchgeführt wird, zwischen dessen porösen Elektroden ein poröses Diaphragma angeordnet ist, wobei in den Poren von Elektroden und Diaphragma ein flüssiger Elektrolyt durch Kapillarkräfte fixiert ist.

2. Verfahren nach Anspruch 1, **dadurch gekennzeichnet**, daß das Edukt für die Elektrolyse eine wäßrige Lösung ist.

3. Verfahren nach Anspruch 2, **dadurch gekenn-**

**zeichnet**, daß die wäßrige Lösung in einem Kreislauf geführt wird.

4. Verfahren nach Anspruch 3, **dadurch gekennzeichnet**, daß in dem Kreislauf ein Vorratsbehälter angeordnet ist.

5. Verfahren nach Anspruch 4, **dadurch gekennzeichnet**, daß der Vorratsbehälter drucklos mit Wasser nachgefüllt wird.

6. Verfahren nach Anspruch 5, **dadurch gekennzeichnet**, daß der Vorratsbehälter mit Wasser in Leitungswasserqualität nachfüllbar ist.

7. Verfahren nach Anspruch 3, **dadurch gekennzeichnet**, daß Wasser aus wasserdampfbeladenen Abgasen des Kraftfahrzeugs gewonnen und in den Kreislauf der wäßrigen Lösung eingespeist wird.

8. Verfahren nach Anspruch 1, **dadurch gekennzeichnet**, daß das Edukt für die Elektrolyse Wasser ist, welches mittels eines wasserdampfbeladenen Gaskreislaufs dem Elektrolyseur zugeführt wird.

9. Verfahren nach einem der vorangehenden Ansprüche, **dadurch gekennzeichnet**, daß die Elektrolyse bei variablem Druck durchgeführt wird.

10. Verfahren nach einem der vorangehenden Ansprüche, **dadurch gekennzeichnet**, daß die Elektrolyse ohne aktive Kühlung durchgeführt wird.

11. Verfahren nach einem der vorangehenden Ansprüche, **dadurch gekennzeichnet**, daß der für die Stickoxid-Reduktion benötigte Wasserstoff zusätzlich durch Wasserdampfreformierung und/oder durch Partielle Oxidation von Kohlenwasserstoffen, z.B. Methanol, Diesel- oder Ottokraftstoff erzeugt wird

12. Vorrichtung zur Reduzierung von Stickoxiden in Abgasen von Kraftfahrzeugen durch katalytische Reduktion, umfassend einen Reaktor, in welchem ein Katalysator enthalten ist, an dem die Stickoxid-Reduktion unter Zuführung von Wasserstoff durchgeführt wird, und mindestens einem Elektrolyseur zur Erzeugung des Wasserstoffs an Bord des Kraftfahrzeugs, **dadurch gekennzeichnet durch**, daß der Elektrolyseur zwei poröse Elektroden umfaßt, zwischen denen ein poröses Diaphragma angeordnet ist, wobei in den Poren von Elektroden und Diaphragma ein flüssiger Elektrolyt durch Kapillarkräfte fixiert ist.

13. Vorrichtung nach Anspruch 12, **dadurch gekennzeichnet**, daß sie zur Erzeugung von Wasserstoff zusätzlich einen Reaktor zur Wasserdampfreformierung von Kohlenwasserstoffen und/oder einen Reaktor zur Partiellen Oxidation von Kohlenwasserstoffen umfaßt.

**Claims**

1. Process for the reduction of nitrogen oxides in exhaust gases of motor vehicles by reduction in a catalyst, the hydrogen needed for the nitrogen oxide reduction being produced on board the motor vehicle by electrolysis, characterized in that the electrolysis is carried out using an electrolyzer, between whose porous electrodes a porous membrane is arranged, a liquid electrolyte being immobilized by capillary action in the pores of the electrodes and of the membrane.

2. Process according to Claim 1, characterized in that the educt for the electrolysis is an aqueous solution.

3. Process according to Claim 2, characterized in that the aqueous solution is fed in a circuit.

4. Process according to Claim 3, characterized in that a storage container is arranged in the circuit.

5. Process according to Claim 4, characterized in that the storage container is topped up, not under pressure, with water.

6. Process according to Claim 5, characterized in that the storage container can be topped up with water of mains-supply water quality.

7. Process according to Claim 3, characterized in that water is obtained from exhaust gases of the motor vehicle, which contain steam, and is fed into the circuit of the aqueous solution.

8. Process according to Claim 1, characterized in that the educt for the electrolysis is water, which is fed to the electrolyzer by means of a gas circuit containing steam.

9. Process according to one of the preceding claims, characterized in that the electrolysis is carried out at variable pressure.

10. Process according to one of the preceding claims, characterized in that the electrolysis is carried out without active cooling.

11. Process according to one of the preceding claims, characterized in that the hydrogen needed for the nitrogen oxide reduction is additionally produced by steam reforming and/or by partial oxidation of hydrocarbons, e.g. methanol, diesel fuel or petrol.

**12.** Device for the reduction of nitrogen oxides in exhaust gases of motor vehicles by catalytic reduction, comprising a reactor, containing a catalyst in which the nitrogen oxide reduction is carried out while adding hydrogen, and at least one electrolyzer for producing the hydrogen on board the motor vehicle, characterized in that the electrolyzer comprises two porous electrodes, between which a porous membrane is arranged, a liquid electrolyte being immobilized by capillary action in the pores of the electrodes and of the membrane.

**13.** Device according to Claim 12, characterized in that, in order to produce hydrogen, it additionally comprises a reactor for the steam reforming of hydrocarbons and/or a reactor for the partial oxidation of hydrocarbons.

## Revendications

**1.** Procédé de réduction d'oxydes d'azote dans les gaz d'échappement de véhicules automobiles par réduction sur un catalyseur, l'hydrogène nécessaire à la réduction d'oxydes d'azote étant produit à bord du véhicule automobile par électrolyse, caractérisé en ce que l'électrolyse est réalisée à l'aide d'un électrolyseur entre les électrodes poreuses duquel est disposé un diaphragme poreux, un électrolyte liquide étant fixé dans les pores des électrodes et du diaphragme par des forces capillaires.

**2.** Procédé suivant la revendication 1, caractérisé en ce que le produit de départ pour l'électrolyse est une solution aqueuse.

**3.** Procédé suivant la revendication 2, caractérisé en ce que l'on fait circuler la solution aqueuse dans un circuit.

**4.** Procédé suivant la revendication 3, caractérisé en ce qu'un réservoir est disposé dans le circuit.

**5.** Procédé suivant la revendication 4, caractérisé en ce que le réservoir est rempli avec de l'eau sans pression.

**6.** Procédé suivant la revendication 5, caractérisé en ce que l'on peut remplir le réservoir avec de l'eau d'une qualité d'eau de distribution.

**7.** Procédé suivant la revendication 3, caractérisé en ce que l'eau est récupérée à partir des gaz d'échappement du véhicule automobile chargés de vapeur d'eau et est introduite dans le circuit de la solution aqueuse.

**8.** Procédé suivant la revendication 1, caractérisé en ce que le produit de départ pour l'électrolyse est de l'eau, laquelle est amenée dans l'électrolyseur au moyen d'un circuit de gaz chargés de vapeur d'eau.

**9.** Procédé suivant l'une quelconque des revendications précédentes, caractérisé en ce que l'électrolyse est réalisée à pression variable.

**10.** Procédé suivant l'une quelconque des revendications précédentes, caractérisé en ce que l'électrolyse est réalisée sans refroidissement actif.

**11.** Procédé suivant l'une quelconque des revendications précédentes, caractérisé en ce que l'hydrogène nécessaire à la réduction d'oxydes d'azote est produit en outre par reformage à la vapeur d'eau et/ou par oxydation partielle d'hydrocarbures, par exemple de méthanol, de carburants pour moteurs Diesel ou à essence.

**12.** Dispositif pour la réduction d'oxydes d'azote dans les gaz d'échappement de véhicules automobiles par réduction catalytique, comprenant un réacteur dans lequel est contenu un catalyseur, sur lequel la réduction des oxydes d'azote est réalisée avec une alimentation en hydrogène, et au moins un électrolyseur pour la production de l'hydrogène à bord du véhicule automobile, caractérisé en ce que l'électrolyseur comprend deux électrodes poreuses, entre lesquelles est disposé un diaphragme poreux, un électrolyte liquide étant fixé dans les pores des électrodes et du diaphragme par des forces capillaires.

**13.** Dispositif suivant la revendication 12, caractérisé en ce que, pour la production d'hydrogène, il comprend en outre un réacteur pour le reformage à la vapeur d'eau d'hydrocarbures et/ou un réacteur pour l'oxydation partielle d'hydrocarbures.

Motorabgase
vom Motor

nachmotorisches
Abgasnachbehandlungssystem
zur u. a. Verminderung der
NOx-Abgasanteile

Atmosphäre

gereinigtes Motorabgas
entsprechend der
Grenzwertvorgaben

Wasserstoff

FAE-Elektrolyseursystem zur H2-Erzeugung

Fig. 1

| FTP-Zyklus | NO-Verminderung | | erforderliche $H_2$-Erzeugung bei Stöchiometrie 2.0 | elektrischer Leistungsbedarf Elektrolyseur (therm. Wirkungsgrad 80%) | Wasserverbrauch Elektrolyseur |
|---|---|---|---|---|---|
| | g/Meile | mol/km | | | |
| mittlere Geschhwindigkeit 34.1 km/h | 0,5 | 0,0105 | 0,716 mol/h | 70 W | 0,013 kg/h |
| maximale Geschwindigkeit 92.2 km/h | 0,5 | 0,0105 | 1,936 mol/h | 190 W | 0,035 kg/h |

*Fig 2*

Elektrolyseurbaugröße (ohne Zusatzteile wie Behälter etc.)

| elektr. Leistungsbedarf | Elektrolyseurmasse | Elektrolyseurvolumen |
|---|---|---|
| 70 W | 0,5 kg | $0,44 \ dm^3$ |
| 190 W | 0,9 kg | $0,8 \ dm^3$ |

EP 0 721 794 B1

## Fig. 3

**H2O-Befüllung**

H₂

O₂

Behälter

$H_2O$ - Lösung

Ventile

Pumpe

$H_2O$ - Lösung

$H_2$ | $O_2$

Elektrolyseur
(Zellblock)

Fig. 4

Fig 5

EP 0 721 794 B1

Fig 6

14

EP 0 721 794 B1

# Fig.7

Tank

$\dot{Q}$

$CH_3OH + H_2O$

$H_2 + CO_2$

$(+H_2O)$

Pumpe  Verdampfer  Reaktor  Gasnachbehandlung
(optional)

Fig. 8

H₂O + CH₃OH

el. Heizung

Verdampfer-sektion

Reformer-sektion

Gasnachbe-handlungs-sektion (optional)

H₂ + CO₂ (+H₂O)

Fig. 9

Kompressor

Luft

Tank

CH₃OH (+H₂O)

Pumpe   Verdampfer        Reaktor        Gasnachbehandlung
                                         (optional)

H₂ + CO₂

(+H₂O)

# Fig. 10

CH$_3$OH + H$_2$O

el. Heizung

Luft

| Verdampfersektion | Mischer | Partielle Oxidation | Gasnachbehandlung |

H$_2$ + CO$_2$ (+ H$_2$ + N$_2$)